# EUROPÄISCHE PATENTSCHRIFT

(11) **EP 0 647 605 B1**
(45) Veröffentlichungstag und Bekanntmachung des Hinweises auf die Patenterteilung: **19.03.1997**
(21) Anmeldenummer: 94113809.1
(22) Anmeldetag: 02.09.1994
(51) Int. Cl.: C05F 17/00, C12M 1/107

(54) **Verfahren zur Behandlung von biologisch abbaubaren Substraten**
Process of treating biologically decomposable materials
Procédé de traitement des matériaux dégradables biologiquement

(30) Priorität: 29.09.1993 DE 4333177
(43) Veröffentlichungstag der Anmeldung: 12.04.1995
(73) Patentinhaber: LINDE-KCA-Dresden GmbH, 01067 Dresden (DE)
(72) Erfinder: Langhans, Dipl.-Ing. Gerhard, D-01159 Dresden (DE); Weissgärber, Dipl.-Ing. Hartmut, D-01277 Dresden (DE)
(74) Vertreter: Kasseckert, Rainer

(56) Entgegenhaltungen:
- EP-A- 0 092 882
- EP-A- 0 131 319
- EP-A- 0 290 361
- DE-A- 3 420 433

## Beschreibung

Die Erfindung betrifft ein Verfahren zur Behandlung von diskontinuierlich anfallenden biologisch abbaubaren Substraten, insbesondere von Bioabfällen, die gegebenenfalls nach einer Vorbehandlung einer Vergärung in einer Faulstufe in Gegenwart anaerober Biomasse unterzogen werden.

Vergärungsanlagen für Bioabfälle müssen trotz einer heterogenen Qualität und diskontinuierlichen Anlieferung der Bioabfälle stabilen kontinuierlichen Betrieb gewährleisten. Nach dem Stand der Technik wird versucht, einen zuverlässigen Betrieb derartiger Anlagen durch Schwankungsabpufferung in Folge langer Verweilzeiten von über 15 Tagen in den Faulreaktoren sicherzustellen. Es wurde auch schon ein zweiphasiger Betrieb derartiger Anlagen mit einer Versäuerungsvorstufe und einer anschließenden Methanisierung in einem gesonderten Reaktor vorgeschlagen. Dabei wird die Versäuerung bei kurzen Verweilzeiten von weniger als 3 Tagen durchgeführt. Die Methanisierung erfolgt üblicherweise nach vorheriger Feststoffabtrennung mittels immobilisierter Bakterien.

Aus der DE-OS 41 20 808 ist ein Verfahren zur Aufbereitung von Abfällen für die anaerobe Vergärung biogen-organischer Bestandteile des Mülls, insbesondere von Biomüll, Naßmüll, Restmüll und Gewerbeabfällen, bekannt. Dabei wird zunächst in einer Vorbehandlungsstufe eine leicht entwässerbare Suspension der biogen-organischen Stoffe durch eine mechanische Aufbereitung mit selektiver Auflösung und Zerfaserung der biogen-organischen Stoffe hergestellt. Nach einer physikalischchemischen Aufbereitung der Suspension in einem Rührreaktor wird die Suspension in einem Pufferbehälter zwischengespeichert. Nach einer Fest-Flüssig-Trennung werden die Feststoffe in einem anaeroben Hydrolysereaktor in lösliche Verbindungen umgesetzt. Das dabei gewonnene Hydrolysat wird schließlich einer Methangärung in einem Faulreaktor zugeführt. Bei diesem bekannten Verfahren ist also ein separater, dem Faulreaktor vorgeschalteter, Pufferbehälter notwendig, um einen Mengenausgleich vorzunehmen.

Der vorliegenden Erfindung liegt die Aufgabe zugrunde, ein Verfahren der eingangs genannten Art so auszugestalten, daß auf wirtschaftliche Weise ein stabiler kontinuierlicher Betrieb der Faulstufe gewährleistet ist.

Diese Aufgabe wird erfindungsgemäß gelöst durch ein Verfahren, wie es Gegenstand des unabhängigen Anspruchs 1 ist.

Bevorzugte Ausführungsformen sind Gegenstand der abhängigen Ansprüche 2 bis 13.

Der Erfindung liegt die Erkenntnis zugrunde, daß der gegenüber Belastungsstößen und Prozeßschwankungen besonders empfindlichen Population der methanisierenden Bakterien ein in Konzentration und Menge vergleichmäßigtes Substrat angeboten werden muß. Dazu dient die der Faulstufe vorgeschaltete Konditionierstufe, in der verschiedene Verfahrensschritte zusammengefaßt sind. Dabei besteht ein wesentlicher Unterschied zum Stand der Technik darin, daß in der Konditionierstufe gleichzeitig ein Mengenausgleich stattfindet und biologische Reaktionen durchgeführt werden. Nach dem Stand der Technik ist es nämlich nicht üblich, konventionelle Pufferbehälter als Bioreaktoren zu benutzen, da die unregelmäßigen Bedingungen bezüglich Konzentrations- und Mengenschwankungen dies im allgemeinen nicht gestatten. Auch der in der DE-OS 41 20 808 beschriebene Pufferbehälter dient lediglich einem Mengenausgleich und ist in keiner Weise in die biologische Aufbereitung der Bioabfälle eingebunden.

Erst durch die erfindungsgemäße Rückführung zumindest eines Teiles der anaeroben Biomasse aus der Faulstufe in die Konditionierstufe und durch den zumindest zeitweise und/oder stellenweise aeroben Betrieb der Konditionierstufe wird es ermöglicht, einen Pufferbehälter als Bioreaktor zu nutzen. Die Rückführung anaerober Biomasse als Impf- und Ausgleichsmasse in die zumindest teilweise aerob betriebene Konditionierstufe bewirkt eine aerobe und anaerobe Wechselbeanspruchung der Mikroorganismen, die eine einfache und betriebssichere Prozeßführung ermöglicht. Es ist kein Steuerungs- und Überwachungsaufwand erforderlich, um eine Vielzahl von Stoffströmen taktgleich durch unterschiedliche Technologiekomponenten zu führen, wie dies bei bekannten Verfahren zur Realisierung ähnlicher Ergebnisse erforderlich ist.

Annahme, Erfassung, Wägung, Sortierung und gegebenenfalls Zerkleinerung sowie Auflösung der Substrate erfolgen nach bekannten Verfahren und Technologien. Ein oder mehrere Stoffströme aus der Annahme werden der Konditionierstufe zugeführt und dort gemischt. In der Konditionierstufe wird eine hydraulische Verweilzeit für das zu konditionierende Substrat eingestellt, die ausreicht, um eine weitgehende Homogenisierung des Substrats zu gewährleisten und gleichzeitig einen hydraulischen Ausgleich zwischen der diskontinuierlichen Beschickung der Konditionierstufe mit frischem Substrat und der kontinuierlichen Beschickung der Faulstufe mit konditioniertem Substrat herzustellen.

Um eine besonders intensive aerobe und anaerobe Wechselbeanspruchung der Mikroorganismen sicherzustellen, werden in der Konditionierstufe vorzugsweise zeitlich und räumlich wechselnde aerobe und anaerobe Bedingungen eingestellt. Dies wird zweckmäßigerweise dadurch erreicht, daß die Konditionierstufe intermittierend belüftet wird. Dabei werden Belüftung und Homogenisierung so aufeinander abgestimmt, daß eine anaerobe und aerobe Wechselbeanspruchung der Mikroorganismen sowohl zeitlich als auch räumlich auftritt.

Die Konditionierstufe wird vorteilhafterweise als enzymatischer Hydrolysereaktor betrieben. Um eine weitgehende Hydrolyse des Substrats zu gewährleisten, wird vorzugsweise in der Konditionierstufe ein saures Milieu aufrechterhalten. Erforderlichenfalls wird die Konditionierstufe beheizt, um mesophile oder thermophile Temperaturen zu gewährleisten. Dabei wird insbesondere eine thermophile Betriebsweise der Konditionierstufe bevorzugt, da im thermophilen Temperaturbereich der hydrolytische Feststoffaufschluß durch bakterielle Exoenzyme schneller abläuft.

Das in der Konditionierstufe entstehende Abgas wird zweckmäßigerweise abgeführt und einem Biofilter zur biologischen Reinigung zugeleitet.

Die Substratfaulung und weitere Faulwasser-/Faulschlammbehandlungsschritte erfolgen gemäß dem Stand der Technik.

Die Rückführung eines Teils der anaeroben Biomasse aus der Faulstufe in die Konditionierstufe wird zweckmäßigerweise dadurch erreicht, daß Faulwasser aus dem Ablauf der Faulstufe in die Konditionierstufe zurückgeführt wird. Dadurch wird einerseits erreicht, daß die Konditionierstufe mit anaerober Bakterienflora geimpft wird, wodurch die enzymatische Hydrolyse des frischen Substrats begünstigt wird. Dabei werden die methanisierenden Bakterien vorzugsweise durch eine intermittierende Belüftung gezielt unterdrückt, so daß nur die sauerstofftoleranten Bakteriengruppen erhalten bleiben. Durch Abstimmung von Belüftung und Homogenisierung wird eine zeitliche und räumliche anaerobe und aerobe Wechselbeanspruchung der Mikroorganismen bewirkt, die sich besonders günstig auf den gesamten biologischen Abbauprozeß auswirkt.

Während nach dem Stand der Technik für die Homogenisierung des Substrats, die Hydrolyse der Feststoffe und den Mengenausgleich zwischen der diskontinuierlichen Beschickung mit frischem Substrat und der kontinuierlichen Beschickung der Faulstufe mit hydrolysiertem Substrat stets separate Anlagenteile vorgesehen werden müssen, gelingt es mit der vorliegenden Erfindung überraschenderweise, in einer einzigen Prozeßstufe eine ganze Reihe von Verfahrenszielen zusammenzufassen:

In der Konditionierstufe wird nicht nur ein Mengenausgleich zwischen diskontinuierlicher Lieferung der Eingangsstoffe und kontinuierlicher Beschickung der Faulstufe durchgeführt, sondern auch ein hydrolytischer Feststoffaufschluß durch bakterielle Exoenzyme erreicht. Durch Animpfung der Konditionierstufe mit anaerober Biomasse aus der Faulstufe sowie anaerober und aerober Wechselbeanspruchung der Mikroorganismen wird es ermöglicht, einen Pufferbehälter als Bioreaktor zu nutzen. Nach dem Stand der Technik können dagegen konventionelle Pufferbehälter nicht als Bioreaktoren verwendet werden, da die unregelmäßigen Bedingungen bezüglich Konzentration- und Mengenschwankungen dies üblicherweise nicht gestatten.

Durch den mit der Erfindung erzielbaren weitgehenden hydrolytischen Feststoffaufschluß durch bakterielle Exoenzyme in der Konditionierstufe wird außerdem die Umsetzung der Hydrolyseprodukte in kurzkettige Karbonsäuren durch den Stoffwechsel acidogener und acetogener Bakterien in der Faulstufe begünstigt.

Durch die aerobe und anaerobe Wechselbeanspruchung der Mikroorganismen werden Streßreaktionen der Aerobier und Anaerobier herbeigeführt, die sich insgesamt positiv auf den biologischen Abbauprozeß auswirken. Außerdem wird dabei die Tatsache ausgenutzt, daß unterschiedliche Stoffgruppen selektiv von aeroben und anaeroben Mikroorganismen verwertet werden. Dadurch kann ein breiteres und qualitativ wechselndes Substratspektrum verwertet werden. Durch den teilweisen aeroben Betrieb der Konditionierstufe wird darüber hinaus die methanisierende Flora aus dem Rücklauf von der Faulstufe unterdrückt. Durch eine intermittierende Belüftung der Konditionierstufe wird ferner das Stoffwechselgift H₂S aus der flüssigen Phase im sauren Milieu ausgestrippt.

Durch Einstellung eines sauren, thermophilen Milieus in der Konditionierstufe wird auch bei kurzen Aufenthaltszeiten eine weitgehende Produkthygienisierung und Reduzierung der Samenkeimfähigkeit erreicht.

Darüber hinaus wird ein in Art und Konzentration der Inhaltsstoffe vergleichmäßigtes Substrat für die weitere anaerobe Verwertung auch bei sehr unterschiedlichen Eingangsstoffen geschaffen.

Da in der Konditionierstufe organische Trockensubstanz in lösliche Verbindungen überführt wird, verbessert sich auch das hydraulische Stoffhandling. Außerdem wird durch die Substratbereitstellung in Form wasserlöslicher Verbindungen die anaerobe Stoffumsatzleistung in der Faulstufe erhöht. Betriebsstabilität und Regelfähigkeit der Faulstufe werden darüber hinaus verbessert.

Im Gegensatz zur konventionellen zweistufigen Vergärung wird beim erfindungsgemäßen Verfahren eine Hydrolysat-Neutralisation vermieden. Außerdem wird kein angesäuerter Feststoff nach der Hydrolyse aus dem Verfahren ausgeschleust.

Die bekannten Verfahren zur Bioabfall- oder Restmüllbehandlung mit biologischen Prozeßstufen realisieren immer nur einzelne der angegebenen Verfahrensziele und gestatten damit keine optimierte Gesamtprozeßführung.

Mit dem erfindungsgemäßen Verfahren kann der technologische Aufwand für Vergärungsanlagen sowie der Wartungsbedarf derartiger Anlagen erheblich verringert werden. Außerdem wird die Betriebssicherheit entscheidend erhöht.

Auch bei stark schwankenden Eingangsstoffen ist die Entsorgung der zu behandelnden Substrate gesichert.

Eine sichere Produkthygienisierung und Verringerung der Samenkeimfähigkeit ist auch bei einem Betrieb der Konditionierstufe als vollständig durchmischter Rührreaktor möglich. Da die Konditionierstufe vorzugsweise in saurem Milieu und bei thermophilen Temperaturen betrieben wird, werden die Keime abgetötet, bevor vorzugsweise in Intervallen, quasi-kontinuierlich in die Faulstufe dosiert wird. Auch bei kontinuierlicher Dosierung mit Verweilzeiten von ca. 3 Tagen im sauren, thermophilen Konditionierungsmilieu und von 10 bis 15 Tagen im thermophilen Faulreaktormilieu wird insgesamt eine sichere Hygienisierung erreicht. Das ist insbesondere bei einer Mitverarbeitung von Abfällen aus Tierkörperverwertungsanlagen sowie von Klärschlämmen und Fäkalien sowie samenhaltigem Grünschnitt aus Gartenanlagen wichtig.

Durch das folgende Auslegungsbeispiel sollen weitere Einzelheiten der Erfindung erläutert werden:

Zahlreiche Versuche zur Konditionierung und Faulung biogener Abfallstoffe unterschiedlicher Zusammensetzung und Konzentration führten zu dem überraschenden Ergebnis, daß bei Einhaltung der nachfolgend beschriebenen Verfahrensparameter innerhalb von 5 Stunden bis maximal 3 Tagen eine Versäuerung bis zu pH-Werten von 5,3 bis 4,7 eintrat, die dann stabil blieb.

In diesem Zeitraum erfolgte der weitgehende Umsatz der in der konventionellen Mischfaulung bei Verweilzeiten von über 15 Tagen abgebauten organischen Substanz zu niedermolekularen Carbonsäuren mit einem Essigsäureanteil bis zu 60 %. Das galt gleichermaßen für so unterschiedliche Substrate wie Vegetabilien, Haus- und Küchenabfälle, Fette oder Güllen.

Mit dem konditionierten Substrat konnte eine Mischfaulung bei Verweilzeiten von weniger als 15 Tagen stabil betrieben werden, unabhängig von Schwankungen und Stoßbelastungen im Zulauf der Konditionierstufe.

Dabei wurde die Konditionierstufe unter Einhaltung folgender Verfahrensparameter betrieben:
Verweilzeiten zwischen 5 Stunden und 7 Tagen
Temperaturen zwischen 40°C und 55°C
Belüftungsrate von 3 bis 6 m³/m³/h
Belüftungsintervall von 5 min Belüftung bei 20 min Pause bis 30 min Belüftung bei 4 Stunden Pause
Eindicken des Subtrats auf eine Feststoffkonzentration von 7 bis 18 % vor dem Eintritt in die Konditionierstufe.

Bei dieser Konditionierung wurden z.B. 90 % der Fette in Carbonsäuren umgesetzt. Bei den suspendierten Feststoffen wurde eine Verringerung von bis zu 20 % erreicht. Außerdem wurde die Korngröße der Feststoffe von 3 bis 5 mm auf 0,2 bis 2 mm reduziert.

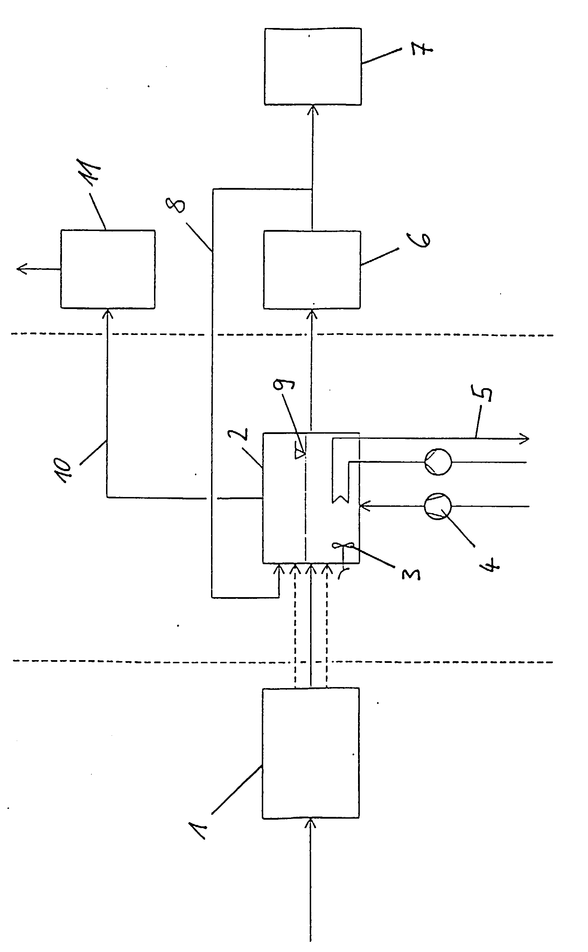

Anhand des folgenden in der Figur schematisch dargestellten Ausführungsbeispiels soll die Erfindung weiter erläutert werden:

Die zu behandelnden Bioabfälle werden zunächst in vorgeschalteten Anlagenteilen, die in der Zeichnung schematisch in Stufe 1 zusammengefaßt sind, sortiert, zerkleinert und aufgelöst. Anschließend wird ein Stoffstrom oder werden mehrere Stoffströme der Konditionierstufe 2 zugeführt und dort mittels eines Rührers 3 gemischt. Über ein Gebläse 4 wird die Konditionierstufe 2 intermittierend belüftet. Zusätzlich kann die Konditionierstufe 2 über einen Heißwasserkreislauf 5 beheizt werden. In der Konditionierstufe 2 werden ein saures Milieu und thermophile Temperaturen von 40 bis 55°C aufrechterhalten, um eine enzymatische Hydrolyse der Bioabfallsuspension zu ermöglichen.

Die in der Konditionierstufe 2 homogenisierte und hygienisierte Bioabfallsuspension wird anschließend der Faulstufe 6 zugeführt. Die Faulstufe 6 wird als herkömmlicher Methanreaktor mit oder ohne immobilisierter Biomasse betrieben. Der Ablauf aus der Faulstufe wird weiteren Aufbereitungsschritten zugeführt, die in der Zeichnung in Stufe 7 schematisch zusammengefaßt sind. Ein Teil des ausgefaulten Substrats wird über Rückführleitung 8 in die Konditionierstufe 2 zurückgeführt. Damit erfolgt ein dosiertes Animpfen der Konditionierstufe 2 mit anaerober Bakterienflora, wobei die methanisierenden Bakterien durch die intermittierende Belüftung mittels des Gebläses 4 gezielt unterdrückt werden und nur die sauerstofftoleranten Bakteriengruppen erhalten bleiben. Belüftung und Homogenisierung werden so aufeinander abgestimmt, daß eine anerobe und aerobe Wechselbeanspruchung der Mikroorganismen sowohl zeitlich als auch räumlich auftritt. Durch die aerobe und anaerobe Wechselbeanspruchung der Mikroorganismen in Verbindung mit der dem jeweiligen Zustand in der Konditionierungsstufe 2 angepaßten Rückführung von ausgefaultem Substrat aus der nachfolgenden Faulstufe 6 über die Rückführleitung 8 als Impf- und Ausgleichsmasse wird es möglich, einen konventionellen Pufferbehälter als Konditionierstufe 2 einzusetzen und diesen als Bioreaktor zu nutzen.

Bei diskontinuierlicher Beschickung der Konditionierstufe 2 mit frischem Substrat schwankt der Füllstand 9 in der Konditionierstufe 2 in einem vorbestimmten Bereich, so daß das konditionierte Substrat kontinuierlich oder quasi-kontinuierlich in Intervallen an die Faulstufe 6 abgegeben werden kann. Dabei ist die hydraulische Verweilzeit für das zu konditionierende Substrat so ausgelegt, daß sowohl eine Homogenisierung des Substrats gewährleistet wird als auch ein hydraulischer Ausgleich zwischen der diskontinuierlichen Beschickung der Konditionierstufe 2 mit frischem Substrat und der kontinuierlichen Beschickung der Faulstufe 6 mit konditioniertem Substrat hergestellt wird.

In der Konditionierstufe 2 entstehendes Abgas wird über die Abgasleitung 10 abgeführt und einem Biofilter 11 zur biologischen Reinigung zugeleitet.

## Patentansprüche

1. Verfahren zur Behandlung von diskontinuierlich anfallenden biologisch abbaubaren Substraten, insbesondere von Bioabfällen, die gegebenenfalls nach einer Vorbehandlung einer Vergärung in einer Faulstufe (6) in Gegenwart anaerober Biomasse unterzogen werden, wobei der Faulstufe (6) eine Konditionierstufe (2) vorgeschaltet ist, in die zumindest ein Teil der anaeroben Biomasse aus der Faulstufe (6) zurückgeführt wird und in der die Substrate homogenisiert werden, **dadurch gekennzeichnet**, daß
a) in der Konditionierstufe (2) zumindest zeitweise und/oder stellenweise aerobe Bedingungen eingehalten werden, und
b) in der Konditionierstufe (2) ein hydraulischer Ausgleich zwischen einer diskontinuierlichen Beschickung der Konditionierstufe (2) mit frischem Substrat und einer kontinuierlichen Beschickung der Faulstufe (6) mit konditioniertem Substrat hergestellt wird.

2. Verfahren nach Anspruch 1, dadurch gekennzeichnet, daß in der Konditionierstufe (2) zeitlich und räumlich wechselnde aerobe und anaerobe Bedingungen eingestellt werden.

3. Verfahren nach Anspruch 1 oder 2, dadurch gekennzeichnet, daß die Konditionierstufe (2) intermittierend belüftet wird.

4. Verfahren nach einem der Ansprüche 1 bis 3, dadurch gekennzeichnet, daß das Substrat in der Konditionierstufe (2) hydrolysiert wird.

5. Verfahren nach einem der Ansprüche 1 bis 4, dadurch gekennzeichnet, daß in der Konditionierstufe (2) ein saures Milieu aufrechterhalten wird.

6. Verfahren nach einem der Ansprüche 1 bis 5, dadurch gekennzeichnet, daß die Konditionierstufe (2) bei thermophilen Temperaturen betrieben wird.

7. Verfahren nach einem der Ansprüche 1 bis 6, dadurch gekennzeichnet, daß die Konditionierstufe (2) beheizt wird.

8. Verfahren nach einem der Ansprüche 1 bis 7, dadurch gekennzeichnet, daß in der Konditionierstufe (2) entstehendes Abgas abgeführt und einem Biofilter (11) zur biologischen Reinigung zugeführt wird.

9. Verfahren nach einem der Ansprüche 1 bis 8, dadurch gekennzeichnet, daß in der Konditionierstufe (2) eine hydraulische Verweilzeit von 5 Stunden bis 7 Tagen eingestellt wird.

10. Verfahren nach einem der Ansprüche 1 bis 9, dadurch gekennzeichnet, daß in der Konditionierstufe (2) eine Temperatur von 40 bis 55°C eingestellt wird.

11. Verfahren nach einem der Ansprüche 1 bis 10, dadurch gekennzeichnet, daß die Konditionierstufe (2) mit einer Belüftungsrate von 3 bis 6 m³/m³/h belüftet wird.

12. Verfahren nach einem der Ansprüche 3 bis 11, dadurch gekennzeichnet, daß bei einer intermittierenden Belüftung Belüftungsintervalle von 5 min bis 30 min Dauer und Belüftungspausen von 20 min bis 4 h eingehalten werden.

13. Verfahren nach einem der Ansprüche 1 bis 12, dadurch gekennzeichnet, daß das der Konditionierstufe (2) zuzuführende frische Substrat auf eine Feststoffkonzentration von 7 bis 18 % eingedickt wird.

## Claims

1. Process for treating biodegradable substrates produced batchwise, in particular biowastes, which, if appropriate, after a pretreatment are subjected to a fermentation in a digestion stage (6) in the presence of an anaerobic biomass, a conditioning stage (2) being connected upstream of the digestion stage (6), into which conditioning stage at least a part of the anaerobic biomass is recycled from the digestion stage (6) and in which the substrates are homogenized, characterized in that
a) aerobic conditions are maintained at least at times and/or in places in the conditioning stage (2), and
b) a hydraulic balance is produced in the conditioning stage (2) between batchwise charging of the conditioning stage (2) with fresh substrate and continuous charging of the digestion stage (6) with conditioned substrate.

2. Process according to Claim 1, characterized in that, in the conditioning stage (2), aerobic and anaerobic conditions alternating in time and space are established.

3. Process according to Claim 1 or 2, characterized in that the conditioning stage (2) is intermittently aerated.

4. Process according to one of Claims 1 to 3, characterized in that the substrate is hydrolyzed in the conditioning stage (2).

5. Process according to one of Claims 1 to 4, characterized in that an acidic environment is maintained in the conditioning stage (2).

6. Process according to one of Claims 1 to 5, characterized in that the conditioning stage (2) is operated at thermophilic temperatures.

7. Process according to one of Claims 1 to 6, characterized in that the conditioning stage (2) is heated.

8. Process according to one of Claims 1 to 7, characterized in that exhaust gas produced in the conditioning stage (2) is removed and fed to a bio filter (11) for biological purification.

9. Process according to one of Claims 1 to 8, characterized in that a hydraulic residence time of 5 hours to 7 days is set in the conditioning stage (2).

10. Process according to one of Claims 1 to 9, characterized in that a temperature of 40 to 55°C is set in the conditioning stage (2).

11. Process according to one of Claims 1to 10, characterized in that the conditioning stage (2) is aerated at an aeration rate of 3 to 6 m³/m³/h.

12. Process according to one of Claims 3 to 11, characterized in that, when aeration is intermittent, aeration periods of 5 minutes' to 30 minutes' duration and aeration pauses of 20 min to 4 h are maintained.

13. Process according to one of Claims 1 to 12, characterized in that the fresh substrate to be fed to the conditioning stage (2) is thickened to a solids concentration of 7 to 18%.

## Revendications

1. Procédé de traitement de matériaux dégradables biologiquement, obtenus de manière discontinue, en particulier de biodéchets, qui sont facultativement soumis, après un traitement préalable, à une fermentation dans une étape de putréfaction (6) en présence d'une biomasse anaérobie, où l'étape de putréfaction (6) est intercalée avant une étape de conditionnement (2), dans laquelle au moins une partie de la biomasse anaérobie est ramenée de l'étape de putréfaction (6) et dans laquelle les matériaux sont homogénéisés, caractérisé en ce que
a) dans l'étape de conditionnement (2), des conditions aérobies sont maintenues au moins de manière sporadique et/ou par endroits, et
b) dans l'étape de conditionnement (2), on prépare un équilibrage hydraulique entre un chargement discontinu de l'étape de conditionnement (2) avec des matériaux frais et un chargement continu de l'étape de putréfaction (6) avec des matériaux conditionnés.

2. Procédé suivant la revendication 1, caractérisé en ce que, dans l'étape de conditionnement (2), on ajuste des conditions aérobies et anaérobies variables dans le temps et dans l'espace.

3. Procédé suivant la revendication 1 ou 2, caractérisé en ce que l'étape de conditionnement (2) est mise à l'air de manière intermittente.

4. Procédé suivant l'une quelconque des revendications 1 à 3, caractérisé en ce que les matériaux sont hydrolysés dans l'étape de conditionnement (2).

5. Procédé suivant l'une quelconque des revendications 1 à 4, caractérisé en ce que, dans l'étape de conditionnement (2), on maintient un milieu acide.

6. Procédé suivant l'une quelconque des revendications 1 à 5, caractérisé en ce que l'étape de conditionnement (2) est conduite à des températures thermophiles.

7. Procédé suivant l'une quelconque des revendications 1 à 6, caractérisé en ce que l'étape de conditionnement (2) est chauffée.

8. Procédé suivant l'une quelconque des revendications 1 à 7, caractérisé en ce que, dans l'étape de conditionnement (2), les gaz résiduaires formés sont éliminés et que l'on introduit un biofiltre (11) pour la purification biologique.

9. Procédé suivant l'une quelconque des revendications 1 à 8, caractérisé en ce que, dans l'étape de conditionnement (2), on réalise une période de séjour hydraulique de 5 heures à 7 jours.

10. Procédé suivant l'une quelconque des revendications 1 à 9, caractérisé en ce que, dans l'étape de conditionnement (2), on ajuste une température de 40 à 55°C.

11. Procédé suivant l'une quelconque des revendications 1 à 10, caractérisé en ce que l'étape de conditionnement (2) est mise à l'air avec une vitesse d'aération de 3 à 6 m³/heure.

12. Procédé suivant l'une quelconque des revendications 3 à 11, caractérisé en ce que lors d'une mise à l'air intermittente, on maintient des intervalles de mise à l'air d'une durée de 5 minutes à 30 minutes et des pauses de mise à l'air de 20 minutes à 4 heures.

13. Procédé suivant l'une quelconque des revendications 1 à 12, caractérisé en ce que l'étape de conditionnement (2) est concentrée en matériaux frais introduits à une concentration en matière solide de 7 à 18%.
